# EUROPEAN PATENT SPECIFICATION

(11) **EP 1 891 499 B1**
(45) Date of publication and mention of the grant of the patent: **07.09.2011**
(21) Application number: 06754022.9
(22) Date of filing: 31.05.2006
(51) Int. Cl.: G06F 3/042, G06F 3/048

(54) **HOUSEHOLD APPLIANCE HAVING CONCEALABLE USER INTERFACE**
HAUSHALTSGERÄT MIT EINER VERSTECKBAREN BENUTZERSCHNITTSTELLE
APPAREIL MENAGER DOTE D'UNE INTERFACE-UTILISATEUR DISSIMULABLE

(30) Priority: 03.06.2005 SE 0501296
(43) Date of publication of application: 27.02.2008
(73) Proprietor: AB ELECTROLUX, 105 45 Stockholm (SE)
(72) Inventor: FABBRO, Edi, I-33032 Bertiolo (IT); FILIPPETTI, Mario, I-33030 Campoformido UD (IT)
(74) Representative: Markovina, Paolo
(86) International application number: PCT/EP2006/005207
(87) International publication number: WO 2006/128696

(56) References cited:
- EP-A- 0 782 307
- DE-A1- 10 131 010
- DE-C1- 4 041 144
- US-A- 5 239 152
- US-A- 5 589 958
- US-A- 6 061 177

## Description

### Technical field

The present invention relates to a household appliance, such as a refrigerator, oven, or laundering machine, having a concealable user interface.

### Technical background

US 5,589,958 discloses a kitchen ensemble including one or more appliances and one or/more cabinets. Some or all of the appliances and cabinets have windows made of a material having a controllable opacity. The windows are opaque in the normal state, but can be made transparent by operation of a suitable control. Therefore, one can view the contents of the cabinets and/or appliances without opening any doors. The invention therefore enhances the convenience of using the kitchen, and saves energy by minimizing the number of times a refrigerator or range door is opened. It also enhances the aesthetic qualities of the kitchen.

Household appliances such as ovens and laundering machines are traditionally equipped with a user interface that permits a user to control the appliance. The user interface is usually placed on the front side of the appliance, and can comprise an information display and/or a keyboard or user operable buttons or protruding knobs. However, the presence of such user interface can make the household appliance difficult to clean, and it also restricts the design possibilities of the appliance.

### Summary of the invention

It is an object of the present invention to overcome or at least alleviate these problems, and to provide an improved household appliance. This and other objects that will be evident from the following description are achieved, according to one aspect of the invention, by means of a household appliance comprising a user interface, a plate, and means for adjusting the transparency of the plate between essentially transparent and essentially non-transparent, wherein the user interface and plate are so arranged in relation to each other that the user interface is essentially concealed for a user when the plate is essentially non-transparent.

By using a plate having variable transparency, the user interface can be concealed for example when the appliance or user interface is not in use. The plate having variable transparency can for example be achieved by means of suspended particle devices, liquid crystals or electrochromic techniques.

The plate can for example be a glass plate. Alternatively, the plate can be made of plastics or any other suitable material. In one embodiment which is not part of the invention, but which represents background art that is useful for understanding the invention, the user interface is a physical user interface, and the plate is positioned to cover the physical user interface. The physical user interface can for example comprise a conventional LED or LCD based display and/or a keyboard or the like. In this case the plate can be flexible to allow push commands from a user preformed on the plate to be transferred to any push-buttons of the underlying physical user interface. Alternatively, other known under glass techniques can be used. By arranging the plate so that it covers the physical user interface, the physical user interface can be concealed when the plate is in the essentially non-transparent state, for example when the household appliance is not in use. Also, no protruding buttons or knobs have to be used. Preferably, the means for adjusting the transparency of the plate, i.e. the concealing of the user interface, can be controlled automatically and/or manually.

In an embodiment of the invention, the user interface is a virtual user interface, and the household appliance further comprises means for back-projecting the virtual user interface onto the plate.

It should be noted that virtual user interfaces are known per se, for example from the document US6650318.

By back-projecting the user interface onto the plate of the household appliance, there is no need for any protruding buttons or knobs, which in turn for example facilitates the cleaning of the household appliance. Also, it becomes possible to temporarily present a large user interface on the household appliance, which large user interface is easy to use especially for short-sighted persons. Further, since the user interface is not limited to a physical layout, the virtual user interface can be altered or extended or reduced depending on for example what functions that are currently needed to command the household appliance, thereby increasing the flexibility.

The projection means is adapted to project from within the household appliance, whereby the virtual user interface is back-projected onto the plate. The plate can for example form part of a window of the appliance. The projection means can for example be positioned inside the appliance, and the virtual user interface can be projected when the plate is in its essentially transparent state. By this, it becomes possible to have a complete flat front on the household appliance without any physical/visible user interface parts. Further, it should be noted that the aspect of back-projecting the virtual user interface also can be used with a regular constantly essentially transparent plate (which is not an embodiment of the invention).

The household appliance can further comprise means for detecting an action performed by a user on the user interface and for generating signals in response to the action, and means, connected to the detection means, for performing an operation of the household appliance in response to the signals. The detection means can for example be an optical position sensing device, such as a camera, photodiodes (such as IR) or other proximity sensors, or a touch sensitive device at least partly incorporated in and/or outside the plate for detecting what action the user performs on the virtual user interface.

The term household appliance should be construed as a device or piece of equipment designed for use is a home or for performance of domestic chores. The household appliance can for example be an oven, a microwave oven, a refrigerator, a freezer, a dishwasher, a laundering machine, or a tumbler dryer. Further, the plate being essentially transparent should be construed as any bodies lying beyond are seen clearly, while essentially non-transparent should be construed as any bodies lying beyond are not seen clearly or not seen at all.

According to another aspect of the invention, there is provided a household appliance comprising means for back-projecting an interactive virtual user interface onto an at least temporarily essentially transparent plate of the household appliance, means for detecting an action performed by a user on the virtual user interface and for generating signals in response to the action, and means, connected to the detection means, for performing an operation of the household appliance in response to the signals.

According to yet another aspect of the invention, there is provided a method for providing an interactive virtual user interface on a household appliance, which method comprises providing an at least temporarily essentially transparent plate on the household appliance, back-projecting an interactive user interface on the plate from within said house hold appliance, and back-detecting an action performed by a user on the virtual user interface.

### Brief description of the drawings

These and other aspects of the present invention will now be described in more detail, with reference to the appended drawings showing currently preferred embodiments of the invention.
Fig. 1 is a schematic perspective view of a household appliance according to an embodiment which is not part of the invention, but which represents background art that is useful for understanding the invention, and
Fig. 2 is a schematic perspective view of a household appliance according to an embodiment of the invention.

### Detailed description of currently preferred embodiments of the invention

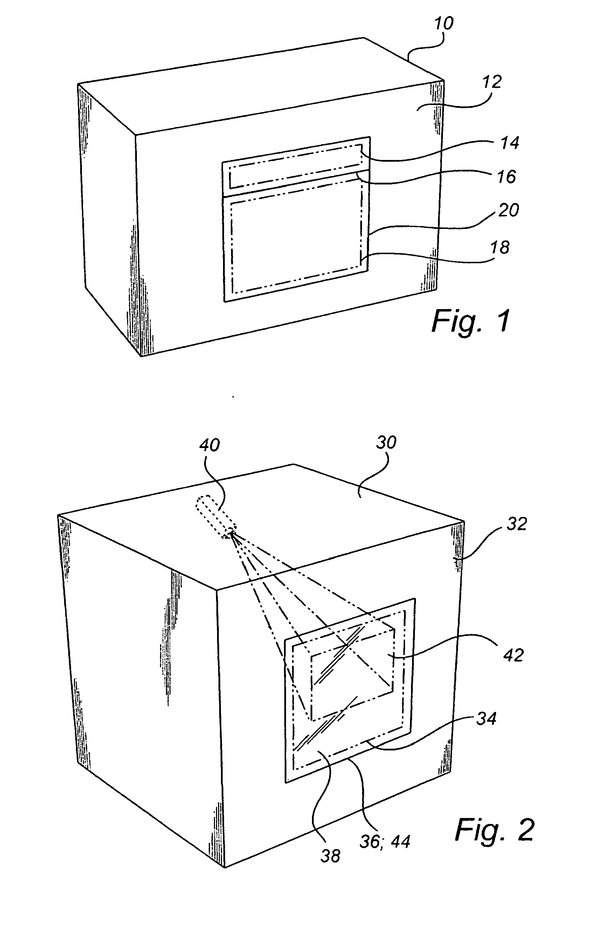

Fig. 1 shows a household appliance 10 according to an embodiment which is not part of the invention, but which represents background art that is useful for understanding the invention. The household appliance 10 can be an oven, a microwave oven, a refrigerator, a freezer, a dishwasher, a laundering machine, a tumbler dryer, etc. On the front side 12 of the appliance 10, there is provided a physical user interface 14. The user interface 14 can comprise a display, such as a LED or LCD display, for showing information related to the operation of the appliance 10, for example remaining running time, selected setup, setup options, etc. The user interface can further comprise a keyboard or keypad for allowing a user to input instructions in order to control the appliance 10, i.e. an interactive user interface.

The household appliance 10 further comprises a plate 16, e.g. a glass plate, which covers the user interface 14. The plate 16 has a variable transparency, ranging from essentially transparent to essentially non-transparent.

Thus, on one hand the user interface 14 can be concealed when the plate 16 is essentially non-transparent, and on the other hand it becomes visible when the plate 16 is essentially transparent.

The transparency of the plate 16, i.e. the concealing/revealing of the user interface 14 can be controlled automatically. For example, the plate can become transparent when the working cycle of the appliance is finished, thereby revealing the user interface and allowing a user to recognize that the working cycle has come to an end. Alternatively, or as a complement, the transparency of the plate 16 can be controlled manually by a user by means of a single control switch (not shown) incorporated in the appliance 10. The control switch could for example be implemented as a touch sensitive area on the plate or the appliance, so that touching that area alters the transparency of the plate.

Optionally, the appliance 10 can comprise an opening 18 covered by a glass plate 20 of essentially the same type as the above mentioned plate 16. When the plate 20 is transparent, a user can inspect the interior and contents of the household appliance 10, for example the food kept in a refrigerator or the laundry in a laundering machine, without having to open up the appliance. On the other hand, when the plate 20 is non-transparent, the contents of the appliance 10 is concealed from outside view. Here, the plates 16 and 20 can be constituted by one single plate covering both the user interface 14 and the opening 18. The plate 20 or the combined plate 16, 20 can form part of a door of the household appliance 10.

In case the user interface 14 comprises a keyboard or buttons or the like for input of user instructions, such buttons can be push-buttons, whereby the plate 16 preferably is flexible to allow push commands from a user preformed on the plate 16 to be transferred to the buttons of the underlying user interface 14. Alternatively, the keyboard can for example be shown on a display of the user interface 14 or just being printed on the user interface 14, whereby an action performed by a user on the keyboard can be detected for example by an optical position sensing device, such as a camera or photodiodes (not shown), or a touch sensitive device at least partly incorporated in and/or outside the plate 16. An operation of the household appliance 10 related to the detected user action is then performed accordingly.

Fig. 2 shows a household appliance 30 according to an embodiment of the invention. As above, the household appliance 30 can be an oven, a microwave oven, a refrigerator, a freezer, a dishwasher, a laundering machine, a tumbler dryer, etc. On the front side 32 of the household appliance 30, there is provided an opening 34 covered by a plate 36, such as a glass plate. That is, the household appliance 30 is provided with a window 38.

The household appliance further comprises means 40 for projecting a virtual user interface 42 onto the plate 34. Here, the projection means 40 is positioned inside the household appliance 30 in order to project from within the appliance, whereby the virtual user interface 42 is back-projected onto the plate 34.

The plate 34 can form part of a door of the household appliance 30. Further, the virtual user interface 42 can comprise both an information display and a keyboard or a keypad or the like, i.e. an interactive user interface. An action performed by a user on the keyboard can be detected for example by an optical position sensing device, such as a camera or photodiodes (not shown), or a touch sensitive device at least partly incorporated in and/or outside the plate 36. An operation of the household appliance 30 related to the detected user action is then performed accordingly.

The projected virtual user interface and related detection means can for example be realised as described in the above mentioned document US6650318. The plate 36 has a variable transparency, ranging from essentially transparent to essentially non-transparent. When the plate is transparent, the virtual user interface 42 (as well as the interior of the appliance) is visible, while when the plate is non-transparent, the virtual user interface 42 (and the interior of the appliance) is concealed. As in the embodiment described above in relation to fig. 1, the transparency of the plate 36 can be controlled automatically and/or manually. Further, the presence of the virtual user interface 42 can be controlled by switching the projection means 40 on or off.

In a further embodiment which is not part of the invention, but which represents background art that is useful for understanding the invention, as an alternative to the plate having variable transparency, the plate forming part of the window 38 can be a regular constantly essentially transparent (glass) plate 44. In this case, the projection means 40 can be turned on/off in order to "reveal"/"conceal" the virtual user interface 42.

The person skilled in the art realizes that the present invention by no means is limited to the preferred embodiments described above. On the contrary, many modifications and variations are possible within the scope of the appended claims.

## Claims

1. A household appliance (30) comprising:
- an opening (34) covered by a plate (36) so as to define a window (38),
- means for adjusting the transparency of said plate (36) between essentially transparent and essentially non-transparent, so as to selectively reveal or conceal the interior of said household appliance (30),
**characterized in that** it comprises:
means (40), positioned inside said household appliance (30), adapted for back-projecting an interactive virtual user interface (42) onto said plate (36), said means for adjusting the transparency of said plate (36) being activated to make said plate (36) essentially transparent, so as to make said interactive virtual user interface (42) visible, said interactive virtual user interface and plate being so arranged in relation to each other that the user interface is essentially concealed for a user when the plate is essentially non-transparent,
means for detecting an action performed by a user on said virtual user interface (42), and for generating signals in response to said action, and
means, connected to said detection means, for performing an operation of said household appliance (30) in response to said signals.

2. A household appliance (30) according to claim 1, **characterized in that** said detection means is an optical position sensing device.

3. A household appliance (30) according to claim 2, **characterized in that** said optical position sensing device comprises a camera or photodiodes.

4. A household appliance (30) according to claim 1, **characterized in that** said detection means is a touch sensitive device associated to said plate (36).

5. A household appliance according to one or more of the previous claims, **characterized in that** said household appliance (30) is at least one of an oven, a microwave oven, a refrigerator, a freezer, a dishwasher, a laundering machine, and a tumbler dryer.

6. A household appliance (30) according to one or more of the previous claims, **characterized in that** said virtual user interface (42) comprises at least a keyboard and an information display.

7. A household appliance (30) according to one or more of the previous claims, **characterized in that** said means (40) for back-projecting said interactive virtual user interface (42) are adapted to alter said interactive virtual user interface (42), depending on the functions currently needed to command said household appliance (30).

8. A household appliance (30) according to one or more of the previous claims, **characterized in that** said means (40) for back-projecting said interactive virtual user interface (42) are adapted to extend or reduce the dimensions of said interactive virtual user interface (42).

9. A method for providing an interactive virtual user interface on a household appliance (30) comprising an opening (34) covered by a plate (36) so as to define a window (38), means being provided for adjusting the transparency of said plate (36) between essentially transparent and essentially non-transparent, so as to selectively reveal or conceal the interior of said household appliance (30), **characterized in that** it comprises:
activating said means for adjusting the transparency of said plate (36) to make said plate (36) essentially transparent,
back-projecting an interactive virtual user interface (42) on said plate (36) from within said household appliance,
detecting an action performed by a user on said virtual user interface (42).

## Patentansprüche

1. Haushaltsgerät (30), umfassend:
- eine Öffnung (34), die durch eine Platte (36) abgedeckt ist, um ein Fenster (38) zu definieren,
- Mittel zum Einstellen der Durchsichtigkeit der Platte (36) zwischen im Wesentlichen durchsichtig und im Wesentlichen undurchsichtig, um das Innere des Haushaltsgeräts (30) selektiv erkennen zu lassen oder zu verbergen,
**dadurch gekennzeichnet, dass** es außerdem umfasst:
Mittel (40), die innerhalb des Haushaltsgeräts (30) positioniert und zum Rückprojizieren einer interaktiven virtuellen Benutzeroberfläche (42) auf die Platte (36) ausgelegt sind, wobei die Mittel zum Einstellen der Durchsichtigkeit der Platte (36) aktiviert werden, um die Platte (36) im Wesentlichen durchsichtig zu machen, um die interaktive virtuelle Benutzeroberfläche (42) sichtbar zu machen, wobei die interaktive virtuelle Benutzeroberfläche und die Platte in Bezug einander so angeordnet sind, dass die Benutzeroberfläche für einen Benutzer im Wesentlichen verborgen ist, wenn die Platte im Wesentlichen undurchsichtig ist,
Mittel zum Erfassen einer Aktion, die von einem Benutzer an der virtuellen Benutzeroberfläche (42) ausgeführt wird, und zum Erzeugen von Signalen als Antwort auf die Aktion, und
Mittel, die mit den Erfassungsmitteln verbunden sind, zum Durchführen eines Arbeitsvorgangs des Haushaltsgeräts (30) als Antwort auf die Signale.

2. Haushaltsgerät (30) nach Anspruch 1, **dadurch gekennzeichnet, dass** das Erfassungsmittel eine optische Positionsbestimmungsvorrichtung ist.

3. Haushaltsgerät (30) nach Anspruch 2, **dadurch gekennzeichnet, dass** die optische Positionsbestimmungsvorrichtung eine Kamera oder Fotodioden umfasst.

4. Haushaltsgerät (30) nach Anspruch 1, **dadurch gekennzeichnet, dass** das Erfassungsmittel eine berührungsempfindliche Vorrichtung ist, die mit der Platte (36) verbunden ist.

5. Haushaltsgerät (30) nach einem oder mehreren der vorhergehenden Ansprüche, **dadurch gekennzeichnet, dass** das Haushaltsgerät (30) mindestens eines von einem Backofen, einem Mikrowellenherd, einem Kühlschrank, einem Gefrierschrank, einem Geschirrspüler, einer Waschmaschine und einem Wäschetrockner ist.

6. Haushaltsgerät (30) nach einem oder mehreren der vorhergehenden Ansprüche, **dadurch gekennzeichnet, dass** die virtuelle Benutzeroberfläche (42) mindestens eine Tastatur und eine Informationsanzeige umfasst.

7. Haushaltsgerät (30) nach einem oder mehreren der vorhergehenden Ansprüche, **dadurch gekennzeichnet, dass** die Mittel (40) zum Rückprojizieren der interaktiven virtuellen Benutzeroberfläche (42) so ausgelegt sind, dass sie die interaktive virtuelle Benutzeroberfläche (42) in Abhängigkeit von den Funktionen ändern, die zum Steuern des Haushaltsgeräts (30) gerade benötigt werden.

8. Haushaltsgerät (30) nach einem oder mehreren der vorhergehenden Ansprüche, **dadurch gekennzeichnet, dass** die Mittel (40) zum Rückprojizieren der interaktiven virtuellen Benutzeroberfläche (42) so ausgelegt sind, dass sie die Abmessungen der interaktiven virtuellen Benutzeroberfläche (42) vergrößern oder verkleinern.

9. Verfahren zur Bereitstellung einer interaktiven virtuellen Benutzeroberfläche auf einem Haushaltsgerät (30), das eine Öffnung (34) umfasst, die durch eine Platte (36) abgedeckt ist, um ein Fenster (38) zu definieren, wobei Mittel zum Einstellen der Durchsichtigkeit der Platte (36) zwischen im Wesentlichen durchsichtig und im Wesentlichen undurchsichtig vorgesehen sind, um das Innere des Haushaltsgeräts (30) erkennen zu lassen oder zu verbergen, **dadurch gekennzeichnet, dass** es umfasst:
Aktivieren der Mittel zum Einstellen der Durchsichtigkeit der Platte (36), um die Platte (36) im Wesentlichen durchsichtig zu machen,
Rückprojizieren einer interaktiven virtuellen Benutzeroberfläche (42) auf die Platte (36) von innerhalb des Haushaltsgeräts (30),
Erfassen einer Aktion, die von einem Benutzer auf der virtuellen Benutzeroberfläche (42) ausgeführt wird.

## Revendications

1. Appareil ménager (30) comprenant :
- une ouverture (34) couverte par une plaque (36) de manière à définir une fenêtre (38),
- des moyens pour ajuster la transparence de ladite plaque (36) entre essentiellement transparente et essentiellement non transparente, de manière à révéler ou à dissimuler de façon sélective l'intérieur dudit appareil ménager (30),
**caractérisé en ce qu'**il comprend :
des moyens (40), positionnés à l'intérieur dudit appareil ménager (30), adaptés pour rétro-projeter une interface utilisateur virtuelle interactive (42) sur ladite plaque (36), lesdits moyens pour ajuster la transparence de ladite plaque (36) étant activés pour rendre ladite plaque (36) essentiellement transparente, de manière à rendre visible ladite interface utilisateur virtuelle interactive (42),
lesdites interface utilisateur virtuelle interactive et plaque étant agencées de manière telle l'une par rapport à l'autre que l'interface utilisateur est essentiellement dissimulée à un utilisateur lorsque la plaque est essentiellement non transparente, des moyens pour détecter une action réalisée par un utilisateur sur ladite interface utilisateur virtuelle (42), et pour générer des signaux en réponse à ladite action, et des moyens, reliés auxdits moyens de détection, pour réaliser une opération dudit appareil ménager (30) en réponse auxdits signaux.

2. Appareil ménager (30) selon la revendication 1, **caractérisé en ce que** ledit moyen de détection est un dispositif de détection de position optique.

3. Appareil ménager (30) selon la revendication 2, **caractérisé en ce que** ledit dispositif de détection de position optique comprend une caméra ou des photodiodes.

4. Appareil ménager (30) selon la revendication 1, **caractérisé en ce que** ledit moyen de détection est un dispositif tactile associé à ladite plaque (36).

5. Appareil ménager selon l'une ou plusieurs des revendications précédentes, **caractérisé en ce que** ledit appareil ménager (30) est au moins l'un parmi un four, un four micro-ondes, un réfrigérateur, un congélateur, un lave-vaisselle, une machine à laver, et un sèche-linge.

6. Appareil ménager (30) selon l'une ou plusieurs des revendications précédentes, **caractérisé en ce que** ladite interface utilisateur virtuelle (42) comprend au moins un clavier et un affichage des informations.

7. Appareil ménager (30) selon l'une ou plusieurs des revendications précédentes, **caractérisé en ce que** lesdits moyens (40) pour rétro-projeter ladite interface utilisateur virtuelle interactive (42) sont adaptés pour modifier ladite interface utilisateur virtuelle interactive (42), suivant les fonctions nécessaires actuellement pour commander ledit appareil ménager (30).

8. Appareil ménager (30) selon l'une ou plusieurs des revendications précédentes, **caractérisé en ce que** lesdits moyens (40) pour rétro-projeter ladite interface utilisateur virtuelle interactive (42) sont adaptés pour étendre ou réduire les dimensions de ladite interface utilisateur virtuelle interactive (42).

9. Procédé pour fournir une interface utilisateur virtuelle interactive sur un appareil ménager (30) comprenant une ouverture (30) couverte par une plaque (36) de manière à définir une fenêtre (38), des moyens étant fournis pour régler la transparence de ladite plaque (36) entre essentiellement transparente et essentiellement non transparente, de manière à révéler ou dissimuler de façon sélective l'intérieur dudit appareil ménager (30) **caractérisé en ce qu'**il comprend :
l'activation desdits moyens pour régler la transparence de ladite plaque (36) pour rendre ladite plaque (36) essentiellement transparente,
la rétroprojection d'une interface utilisateur virtuelle interactive (42) sur ladite plaque (36) depuis l'intérieur dudit appareil ménager,
la détection d'une action réalisée par un utilisateur sur ladite interface utilisateur virtuelle (42).
